# FASCICULE DE BREVET EUROPEEN

(11) **EP 1 592 136 B1**
(45) Date de publication et mention de la délivrance du brevet: **11.07.2012**
(21) Numéro de dépôt: 05103149.0
(22) Date de dépôt: 19.04.2005
(51) Int. Cl.: H03M 1/12

(54) **Démodulateur adaptable**
Adaptiver Demodulator
Adaptive demodulator

(30) Priorité: 21.04.2004 FR 0450746
(43) Date de publication de la demande: 02.11.2005
(73) Titulaire: STMICROELECTRONICS S.A., 92120 Montrouge (FR)
(72) Inventeur: Guilloux, Yveline, 13120, Gardanne (FR); Palmade, Romain, 13390, Auriol (FR); Romain, Fabrice, 83560, Rians (FR); Wuidart, Sylvie, 83910, Pourrieres (FR)
(74) Mandataire: de Beaumont, Michel

(56) Documents cités:
- GB-A- 2 075 693
- US-A- 5 751 884

## Description

La présente invention concerne le domaine des démodulateurs et plus particulièrement les démodulateurs de signaux radiofréquence dont les résultats doivent être exploités par une unité de traitement numérique.

Le document US-A-5 751 884 donne un exemple d'un tel démodulateur.

Un exemple d'application de la présente invention concerne les systèmes à transpondeurs électromagnétiques dans lesquels un transpondeur communique avec une borne de lecture-écriture sans contact.

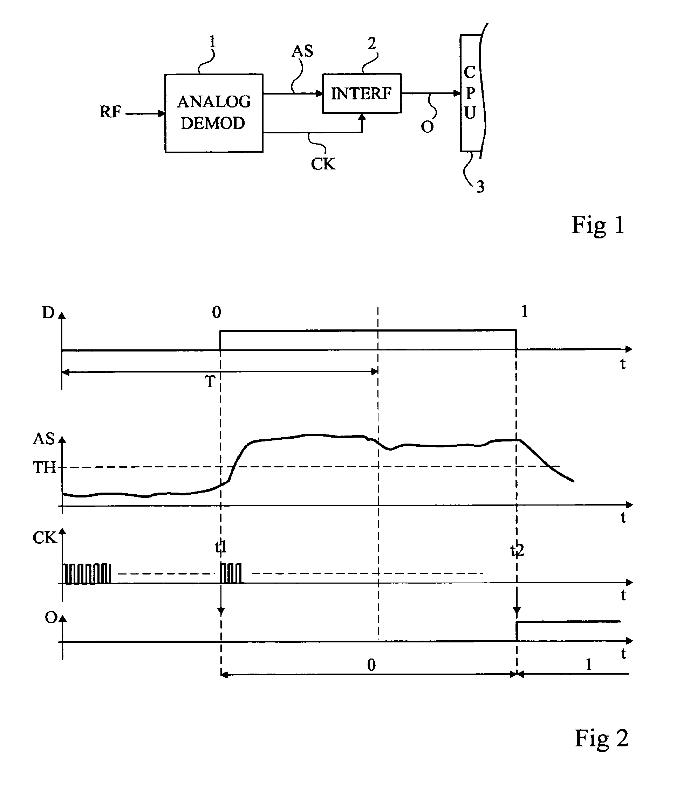

La figure 1 représente, de façon très schématique et sous forme de blocs, la partie démodulation en réception de signaux radiofréquence par un transpondeur électromagnétique.

Après avoir été reçus par une antenne et mis en forme par un coupleur (non représentés) les signaux radiofréquence RF sont traités par un démodulateur analogique 1 (ANALOG DEMOD) dont le rôle est de fournir un signal AS analogique démodulé ainsi qu'une horloge CK d'échantillonnage. L'horloge d'échantillonnage est récupérée généralement à partir de la porteuse de transmission. Les signaux AS et CK sont envoyés sur un circuit 2 d'interface (INTERF) dont le rôle est de fournir un signal de sortie O exploitable par un microcontrôleur 3 (CPU) et autres circuits numériques. En pratique, le signal O est fourni à un bus de données avec lequel communique l'unité centrale 3. Dans une application aux transpondeurs électromagnétiques, une transmission d'une borne vers un transpondeur s'effectue en utilisant une porteuse à 13,56 MHz sur laquelle sont transmises des informations codées, généralement en modulation d'amplitude avec un taux de modulation non nul, à un débit de 106 kilobits par seconde. Côté transpondeur, la porteuse sert à téléalimenter des circuits du transpondeur dans le cas où ce dernier est dépourvu de batterie. Le même principe de démodulation est utilisé dans une borne à la différence près que le signal d'horloge est généralement présent dans celle-ci sans qu'il soit nécessaire de l'extraire du signal reçu.

La figure 2 illustre, par des chronogrammes, le principe d'une démodulation effectuée dans un circuit tel qu'illustré par la figure 1.

Le premier chronogramme illustre un exemple de données D transmis par le signal RF et devant être récupéré en sortie O du circuit 2. Dans cet exemple, on suppose que la transmission d'un bit à l'état 0 correspond, à l'intérieur d'un temps de bit T, à un niveau bas suivi d'un niveau haut tandis que la transmission d'un 1 correspond à l'inverse (niveau haut suivi d'un niveau bas). Il s'agit là d'un exemple et différents types de codages et de transmission sont susceptibles d'être utilisés. Dans l'exemple des transpondeurs électromagnétiques utilisant une fréquence de porteuse à 13,56 Mégahertz, la durée T correspond, par exemple, à 106 kilohertz.

En sortie du démodulateur analogique 1, on obtient un signal AS (deuxième chronogramme) qui suit grossièrement l'allure du signal D.

Le signal CK d'horloge récupéré (troisième chronogramme) correspond au signal de la porteuse, c'est-à-dire à une fréquence de 13,56 Mégahertz. Pour des raisons de clarté, les chronogrammes de la figure 2 ne sont pas à l'échelle, notamment dans l'échelle temporelle des chronogrammes AS et CK.

Le dernier chronogramme de la figure 2 représente le signal O.

Dans un circuit 2 classique, le signal AS est échantillonné une seule fois au milieu d'un cycle (instants t1 et t2) . En fait, le signal AS est envoyé en entrée d'un inverseur dont le seuil de basculement TH conditionne l'état fourni en sortie O.

Un premier inconvénient d'un système de démodulation classique tel qu'illustré par les figures 1 et 2 est que, si le signal AS est fortement perturbé, l'instant t1 ou t2, de prise en compte du niveau du signal risque de fournir un résultat erroné.

Un autre inconvénient est qu'il n'est pas possible de rapprocher les différents instants d'analyse du signal AS dans la mesure où cela conduirait à des vitesses incompatibles avec la vitesse de travail de l'unité centrale dont la fréquence d'horloge correspond au maximum à la fréquence de l'horloge CK. Par conséquent, le débit est limité.

En reprenant l'exemple des systèmes à transpondeurs électromagnétiques basés sur une fréquence de 13,56 Mégahertz, la limite est en pratique de 106 kilobits par seconde pour respecter le temps nécessaire à une analyse logicielle des données reçues.

Il serait souhaitable de pouvoir accroître la vitesse de transmission de tels systèmes. Par exemple, dans une application où l'on souhaite transmettre des images (photographiques, empreintes biométriques), un débit de 106 kilobits par seconde entraîne des temps de transmission de plusieurs secondes, incompatible avec les vitesses d'analyse souhaitées.

La présente invention vise à optimiser la démodulation de signaux RF et en particulier à accroître les débits de transmission possibles pour une fréquence d'horloge donnée.

L'invention vise également à proposer une solution qui s'affranchisse des problèmes éventuels de perturbation dans le signal issu d'un démodulateur analogique.

L'invention vise également à proposer une solution qui soit compatible avec les architectures classiques de transpondeurs électromagnétiques et notamment avec des systèmes dans lesquels l'horloge est transmise en même temps que le signal radiofréquence.

Pour atteindre ces objets ainsi que d'autres, la présente invention prévoit un circuit de détection d'un état binaire porté par un symbole analogique, comportant :
un élément de conversion analogique-numérique utilisant un signal d'échantillonnage basé sur une fréquence de période inférieure à la durée d'un symbole ;
des moyens de sélection d'un nombre d'échantillons significatifs inférieur au nombre d'échantillons qui serait obtenu avec un échantillonnage du symbole à ladite fréquence ; et
des moyens de décision de l'état du symbole à partir des échantillons sélectionnés.

Selon un mode de réalisation de la présente invention, lesdits moyens de décision reçoivent un nombre impair d'échantillons et fournissent l'état binaire du symbole en appliquant un critère de décision majoritaire.

Selon un mode de réalisation de la présente invention, les positions respectives des échantillons significatifs sont déterminées par une phase d'apprentissage ou de caractérisation.

Selon un mode de réalisation de la présente invention, le signal d'échantillonnage est dérivé des positions choisies pour les échantillons significatifs.

Selon un mode de réalisation de la présente invention, le signal d'échantillonnage correspond à ladite fréquence.

Selon un mode de réalisation de la présente invention, la sortie de l'élément de conversion analogique-numérique est envoyée en entrée d'un registre à décalage dont les sorties parallèles sont fournies à un multiplexeur de sélection desdits échantillons significatifs.

Selon un mode de réalisation de la présente invention, des registres stockent au moins la position dans un symbole d'un échantillon considéré comme significatif.

Selon un mode de réalisation de la présente invention, elle est appliquée à un système de transmission entre un transpondeur électromagnétique et une borne de lecture-écriture.

L'invention prévoit également un procédé de détermination d'un état binaire porté par un symbole analogique, consistant à :
échantillonner le symbole avec un signal d'échantillonnage basé sur une fréquence de période inférieure à la durée d'un symbole ;
sélectionner un nombre d'échantillons significatifs inférieur au nombre d'échantillons qui serait obtenu avec un échantillonnage du symbole à ladite fréquence ; et
décider de l'état du symbole à partir des échantillons sélectionnés.

Selon un mode de mise en oeuvre de la présente invention, un nombre impair d'échantillons est sélectionné, l'état du symbole étant déterminé par décision majoritaire à partir des états respectifs des différents échantillons.

Selon un mode de réalisation de la présente invention, les positions respectives des échantillons significatifs sont déterminées par une phase d'apprentissage.

Selon un mode de réalisation de la présente invention, le signal d'échantillonnage est dérivé des positions choisies pour les échantillons significatifs.

Selon un mode de réalisation de la présente invention, le signal d'échantillonnage correspond à ladite fréquence.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 décrite précédemment représente une architecture de démodulation classique ;
la figure 2 décrite précédemment illustre le fonctionnement du démodulateur de la figure 1 ;
la figure 3 représente, de façon très schématique et sous forme de blocs, un exemple d'architecture d'un démodulateur selon l'invention ;
la figure 4 représente un mode de réalisation d'un optimiseur de démodulation selon l'invention ; et
la figure 5 illustre, sous forme de chronogramme, le fonctionnement d'un optimiseur de démodulation selon l'invention.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite. En particulier, les circuits avals au démodulateur n'ont pas été détaillés, l'invention étant compatible avec toute exploitation logicielle classique des signaux. De même, la structure interne d'un démodulateur analogique utilisé pour l'invention correspond à une structure classique et n'a pas été détaillée.

Une caractéristique de la présente invention est de sélectionner, dans un symbole, plusieurs échantillons et de déduire de ces échantillons l'état 0 ou 1 du symbole sans recourir à l'unité centrale de traitement. Selon l'invention, le nombre d'échantillons pris en compte est inférieur au nombre d'échantillons qui serait obtenu avec un échantillonnage à la fréquence sur laquelle est basé le signal d'échantillonnage.

Une autre caractéristique de la présente invention est de sélectionner un nombre réduit d'échantillons par symbole comme correspondant à des échantillons fiables en des positions (temporelles) décidées lors d'une phase d'apprentissage ou de caractérisation, et de déduire l'état du symbole de ces échantillons sélectionnés.

Selon un premier mode de réalisation non représenté, on échantillonne directement le signal analogique issu d'un démodulateur analogique à des instants dans le symbole qui correspondent aux instants fournissant les échantillons sélectionnés. Cela revient à générer un signal d'échantillonnage, basé sur une fréquence de période inférieure à la durée d'un symbole, mais dont le nombre de fronts est inférieur à celui de cette fréquence.

Selon un deuxième mode de réalisation, le signal d'échantillonnage basé sur la fréquence d'échantillonnage est directement cette fréquence. Le signal analogique issu du démodulateur analogique est alors échantillonné à une fréquence correspondant, de préférence, à la fréquence maximale disponible. On déduit ensuite de plusieurs échantillons sélectionnés du symbole l'état 0 ou 1 de ce dernier.

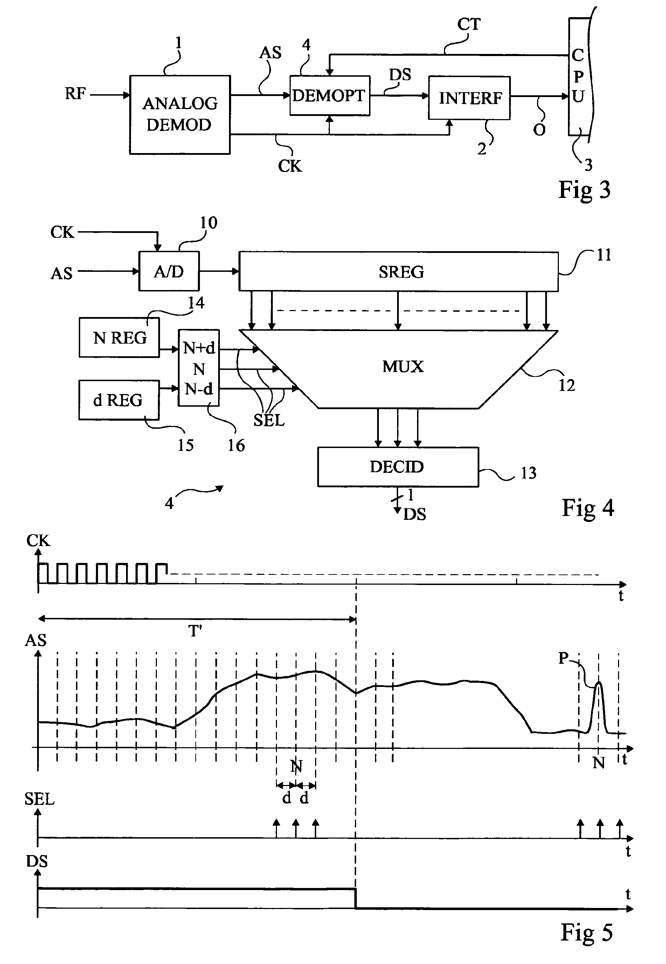

La figure 3 représente, de façon très schématique et sous forme de blocs, ce deuxième mode de réalisation d'un démodulateur selon l'invention.

Comme précédemment, un signal radio fréquence RF est reçu par un démodulateur analogique 2 (ANALOG DEMOD) chargé d'extraire un signal analogique AS ainsi qu'un signal d'horloge CK à la fréquence de la porteuse qui constitue ici le signal d'échantillonnage. Le signal CK est transmis à un circuit 2 d'interface qui fournit les signaux numériques O à une unité centrale de traitement 3 (CPU) à la manière du circuit classique de la figure 1.

Selon ce mode de réalisation de l'invention, un circuit d'optimisation de la démodulation 4 (DEMOPT) est intercalé entre la sortie du démodulateur analogique 1 fournissant le signal AS et l'entrée correspondante du circuit d'interface 2. Ce circuit 4 reçoit par ailleurs le signal d'horloge CK ainsi que des signaux de commande CT de l'unité centrale 3.

Le circuit 4 a pour rôle de fournir un signal DS correspondant à l'état 0 ou 1 du symbole reçu. Ainsi, le circuit d'interface 2 reçoit directement les états exploitables par l'unité centrale 3. Selon une variante de réalisation et sous réserve de la compatibilité électrique des signaux O avec le bus de liaison avec l'unité centrale 3, le circuit 2 peut le cas échéant être omis.

La figure 4 représente un mode de réalisation d'un circuit 4 selon la présente invention.

Le signal AS traverse un convertisseur analogique numérique 10 (A/D) dont la fréquence d'échantillonnage correspond à la fréquence du signal d'horloge CK. La sortie du convertisseur 10 est envoyée sur une entrée série d'un registre à décalage 11 (SREG) dimensionné pour que la longueur d'un mot qu'il contient corresponde au nombre d'échantillons contenu dans un symbole de données transmis.

Tous les bits du registre 11 sont lus en parallèle et envoyés sur des entrées d'un multiplexeur 12 dont le rôle est de sélectionner plusieurs échantillons comme étant significatifs de l'état du symbole.

De préférence et comme illustré par la figure 4, le multiplexeur 12 sélectionne un nombre impair d'échantillons (par exemple, trois) qu'il fournit à un circuit 13 de décision (DECID) dont le rôle est de déterminer l'état du symbole par application d'un procédé de décision majoritaire. La sortie du circuit 13 fournit le bit DS.

Selon un mode de réalisation préféré, la sélection opérée par le multiplexeur 12 est paramétrable. Par exemple, deux registres 13 (NREG) et 14 (dREG) contiennent des mots indicateurs respectivement de la position N d'un échantillon central dans une plage d'échantillons considérés comme fiables et la distance d entre deux d'échantillons de la plage significative. Les valeurs respectives des registres 14 et 15 sont alors exploitées par un circuit de calcul 16 fournissant au multiplexeur 12 les positions respectives N de l'échantillon central de la plage et les positions respectives N+d et N-d des échantillons d'extrémité. Il s'agit là d'un exemple de génération de signaux de sélection SEL mais tout autre moyen pourra être utilisé. Par exemple, la distance d symétrique peut être remplacée par des écarts différents les uns des autres entre les positions des échantillons.

Les contenus respectifs des registres 14 et 15 sont chargés dans le circuit 4 par unité centrale 3 en fonction de données de paramétrage prédéterminées. Dans un exemple particulier où la taille du registre 11 est de 16 bits, les registres 14 et 15 contiennent respectivement des quartets indiquant les positions des échantillons significatifs.

La figure 5 illustre, sous forme de chronogrammes, le fonctionnement d'un circuit d'optimisation selon l'invention. Ces chronogrammes représentent, pour des états 1 et 0 transmis, respectivement le signal d'horloge CK, le signal AS, les signaux de sélection SEL du multiplexeur 12 et la sortie DS du circuit 13.

On suppose un signal AS ayant une forme perturbée de façon classique. Ce signal est échantillonné à la fréquence de l'horloge CK et le multiplexeur sélectionne trois échantillons désignés par leur position respective N-d et N+d. Dans l'exemple de la figure 5, en partie gauche, l'échantillonnage fournit un état 1 sur le signal DS tandis que la partie droite (deuxième symbole) fournit un état 0.

Un avantage de la présente invention est qu'elle évite les éventuelles erreurs de détection dues à des perturbations transitoires sur les signaux démodulés. Une telle perturbation est illustrée en partie droite de la figure 5 sous la forme d'un pic p. On voit bien que, dans ce cas, malgré le fait que l'échantillon N soit considéré comme un état haut, la décision majoritaire opérée par le circuit 13 permet de confirmer l'état 0 du bit transmis.

Selon un premier mode de mise en oeuvre de l'invention, les échantillons les plus significatifs sont déterminés pendant une phase de caractérisation ou de test du produit ou plus précisément d'un lot de produits. L'invention tire alors profit du fait que l'allure générale du signal AS est le plus souvent répétitive pour un même lot de puces de circuit intégré.

Selon un deuxième mode de mise en oeuvre, une phase d'apprentissage est effectuée périodiquement au cours de la vie du produit afin d'adapter le démodulateur à d'éventuelles dérives. Ces deux modes de mise en oeuvre sont combinables.

La mise en oeuvre d'une phase d'apprentissage ou de caractérisation n'entraîne pas de difficulté particulière. Il suffit de connaître la nature du message transmis, de faire plusieurs paramétrages différents des registres 14 et 15 et de sélectionner le premier paramétrage qui donne un résultat correct sur un nombre (considéré comme significatif) de symboles.

Un avantage de l'invention est qu'elle permet d'accélérer le débit de transmission pour une fréquence d'horloge donnée, tout en restant compatible avec une interprétation logicielle des données transmises. En effet, l'unité centrale n'intervient pas (hors de la phase de commande des registres 14 et 15) dans la sélection elle-même de l'échantillon. Il est donc possible d'accroître le nombre de bits transmis tout en respectant la possibilité d'interprétation par l'unité centrale.

Ainsi, en reprenant l'exemple des transpondeurs électromagnétiques, sur une porteuse de 13,56 Mégahertz, la durée T' d'un symbole selon l'invention peut correspondre à un débit de 847,5 kilobits par seconde. Un tel facteur 8 (par rapport au débit classique de 106 kbits/s) paraît faible mais est en fait très avantageux. Par exemple, une image qui met classiquement 4 secondes à être transmise ne met plus, grâce à l'invention qu'une demi-seconde. Cette vitesse devient compatible avec les besoins d'analyse rapide, notamment dans des applications d'authentification ou de contrôle d'accès.

Un autre avantage de la présente invention est que le démodulateur ainsi constitué est paramétrable. Un même circuit matériel peut donc être personnalisé pour être adapté à des circuits intégrés différents.

Bien entendu, la présente invention est susceptible de diverses variantes et modifications qui apparaîtront à l'homme de l'art. En particulier, d'autres fréquences et débits que ceux indiqués ci-dessus pourront être exploités.

De plus, bien que l'invention ait été décrite plus particulièrement en relation avec une accélération du débit, elle permet, même à débit constant, d'améliorer la fiabilité d'un démodulateur analogique.

En outre, la mise en oeuvre pratique de l'invention est à la portée de l'homme du métier, que ce soit par des moyens matériels et/ou logiciels à partir de la description fonctionnelle donnée ci-dessus.

Enfin, l'adaptation de l'exemple représenté au premier mode de réalisation dans lequel la sélection est directement opérée sur les instants d'échantillonnage plutôt que sur les échantillons eux-mêmes est également à la portée de l'homme du métier en utilisant des composants en eux-mêmes connus.

## Revendications

1. Circuit (4) de détection d'un état binaire porté par un symbole analogique (AS), **caractérisé en ce qu'**il comporte :
un élément (10) de conversion analogique-numérique utilisant un signal d'échantillonnage basé sur une fréquence (CK) de période inférieure à la durée d'un symbole ;
des moyens (11, 12, 14, 15, 16) de sélection d'un nombre d'échantillons significatifs inférieur au nombre d'échantillons qui serait obtenu avec un échantillonnage du symbole à ladite fréquence ; et
des moyens (13) de décision de l'état du symbole à partir des échantillons sélectionnés.

2. Circuit selon la revendication 1, dans lequel lesdits moyens de décision (13) reçoivent un nombre impair d'échantillons et fournissent l'état binaire du symbole en appliquant un critère de décision majoritaire.

3. Circuit selon la revendication 1 ou 2, dans lequel les positions respectives (N, N-d, N+d) des échantillons significatifs sont déterminées par une phase d'apprentissage ou de caractérisation.

4. Circuit selon la revendication 3, dans lequel le signal d'échantillonnage est dérivé des positions choisies pour les échantillons significatifs.

5. Circuit selon l'une quelconque des revendications 1 à 3, dans lequel le signal d'échantillonnage correspond à ladite fréquence.

6. Circuit selon la revendication 5, dans lequel la sortie de l'élément de conversion analogique-numérique (10) est envoyée en entrée d'un registre à décalage (11) dont les sorties parallèles sont fournies à un multiplexeur (12) de sélection desdits échantillons significatifs.

7. Circuit selon l'une quelconque des revendications 1 à 6, dans lequel des registres (14, 15) stockent au moins la position (N) dans un symbole d'un échantillon considéré comme significatif.

8. Circuit selon l'une quelconque des revendications 1 à 7, appliqué à un système de transmission entre un transpondeur électromagnétique et une borne de lecture-écriture.

9. Procédé de détermination d'un état binaire porté par un symbole analogique (AS), **caractérisé en ce qu'**il consiste à :
échantillonner (10) le symbole avec un signal d'échantillonnage basé sur une fréquence (CK) de période inférieure à la durée d'un symbole ;
sélectionner (11, 12, 14, 15, 16) un nombre d'échantillons significatifs inférieur au nombre d'échantillons qui serait obtenu avec un échantillonnage du symbole à ladite fréquence ; et
décider (13) de l'état du symbole à partir des échantillons sélectionnés.

10. Procédé selon la revendication 9, dans lequel un nombre impair d'échantillons est sélectionné, l'état du symbole étant déterminé par décision majoritaire à partir des états respectifs des différents échantillons.

11. Procédé selon la revendication 9 ou 10, dans lequel les positions respectives des échantillons significatifs sont déterminées par une phase d'apprentissage.

12. Procédé selon la revendication 11, dans lequel le signal d'échantillonnage est dérivé des positions choisies pour les échantillons significatifs.

13. Procédé selon l'une quelconque des revendications 9 à 11, dans lequel le signal d'échantillonnage (CK) correspond à ladite fréquence.

## Claims

1. A circuit (4) for detecting a binary state supported by an analog symbol (AS), **characterized in that** it comprises:
an analog-to-digital conversion element (10) using a sampling signal based on a frequency (CK) having a period shorter than the duration of a symbol;
means (11, 12, 14, 15, 16) for selecting a number of significant samples smaller than the number of samples which would be obtained with a sampling of the symbol at said frequency; and
means (13) for deciding the symbol state based on the selected samples.

2. The circuit of claim 1, wherein said decision means (13) receive an odd number of samples and provide the binary state of the symbol by applying a majority decision criterion.

3. The circuit of claim 1 or 2, wherein the respective positions (N, N-d, N+d) of the significant samples are determined in a training or characterization phase.

4. The circuit of claim 3, wherein the sampling signal is derived from the positions selected for the significant samples.

5. The circuit of any of claims 1 to 3, wherein the sampling signal corresponds to said frequency.

6. The circuit of claim 5, wherein the output of the analog-to-digital conversion element (10) is sent to the input of a shift register (11) having its parallel outputs provided to a multiplexer (12) for selecting said significant samples.

7. The circuit of any of claims 1 to 6, wherein registers (14, 15) store at least the position (N) in a symbol of a sample considered as being significant.

8. The circuit of any of claims 1 to 7, applied to a system of transmission between an electromagnetic transponder and a read/write terminal.

9. A method for determining a binary state supported by an analog symbol (AS), **characterized in that** it consists of:
sampling (10) the symbol with a sampling signal based on a frequency (CK) having a period shorter than the duration of a symbol;
selecting (11, 12, 14, 15, 16) a number of significant samples smaller than the number of samples which would be obtained with a sampling of the symbol at said frequency; and
deciding (13) the symbol state based on the selected samples.

10. The method of claim 9, wherein an odd number of samples is selected, the symbol state being determined by majority decision based on the respective states of the different samples.

11. The method of claim 9 or 10, wherein the respective positions of the significant samples are determined by a training phase.

12. The method of claim 11, wherein the sampling signal is derived from the positions selected for the significant samples.

13. The method of any of claims 9 to 11, wherein the sampling signal (CK) corresponds to said frequency.

## Patentansprüche

1. Ein Schaltkreis (4) zum Detektieren eines binären Zustands, der durch ein analoges Symbol (AS) unterstützt wird, **dadurch gekennzeichnet, dass** der Schaltkreis Folgendes aufweist:
ein analog-zu-digital Umwandlungselement (10), das ein Samplingsignal verwendet, basierend auf einer Frequenz (CK) mit einer Periode, die kürzer ist als die Dauer eines Symbols;
Mittel (11, 12, 14, 15, 16) zum Auswählen einer Anzahl von signifikanten Samples, die kleiner ist als die Anzahl von Samples, welche mit einem Sampling der Symbole bei dieser Frequenz erzielt werden; und
Mittel (13) zum Entscheiden des Symbolzustands basierend auf den ausgewählten Samples.

2. Der Schaltkreis nach Anspruch 1, wobei die Entscheidungsmittel (13) eine ungerade Anzahl von Samples empfangen und den binären Zustand des Symbols durch ein Majoritätsentscheidungskriterium bereitstellen.

3. Der Schaltkreis nach Anspruch 1 oder 2, wobei die entsprechenden Positionen (N, N-d, N+d) der signifikanten Samples in einer Trainings- oder Charakterisierungsphase bestimmt werden.

4. Der Schaltkreis nach Anspruch 3, wobei das Samplingsignal von den Positionen, die für die signifikanten Samples ausgewählt wurden, abgeleitet wird.

5. Der Schaltkreis nach einem der Ansprüche 1 bis 3, wobei das Samplingsignal der Frequenz entspricht.

6. Der Schaltkreis nach Anspruch 5, wobei die Ausgabe des analog-zu-digital Umwandlungselements (10) an den Eingang eines Schieberegisters (11) gesendet wird, das seine parallelen Ausgänge einem Multiplexer (12), zum Auswählen der signifikanten Samples, bereitgestellt hat.

7. Der Schaltkreis nach einem der Ansprüche 1 bis 6, wobei Register (14, 15) wenigstens die Position (N) in einem Symbol von einem Sample speichern, das als signifikant angesehen wird.

8. Der Schaltkreis nach einem der Ansprüche 1 bis 7, angewendet auf ein Übertragungssystem zwischen einem elektromagnetischen Transponder und einem Lese/Schreib Terminal.

9. Ein Verfahren zum Bestimmen eines binären Zustands, das durch ein analoges Symbol (AS) unterstützt wird, **dadurch gekennzeichnet, dass** das Verfahren folgende Schritte aufweist:
Sampeln (10) des Symbols mit einem Samplingsignal basierend auf einer Frequenz (CK) mit einer Periode, die kürzer ist als die Dauer eines Symbols;
Auswählen (11, 12, 14, 15, 16) einer Anzahl von signifikanten Samples, die kleiner ist als die Anzahl von Samples, welche mit einem Sampling der Symbole bei dieser Frequenz erzielt werden; und
Entscheiden (13) des Symbolzustands basierend auf den ausgewählten Samples.

10. Das Verfahren nach Anspruch 9, wobei eine ungerade Anzahl von Samples ausgewählt wird, wobei der Symbolzustand durch ein Majoritätsentscheidungskriterium, basierend auf einem entsprechenden Zustand der unterschiedlichen Samples, bestimmt wird.

11. Das Verfahren nach Anspruch 9 oder 10, wobei die entsprechenden Positionen der signifikanten Samples in einer Trainingsphase bestimmt werden.

12. Das Verfahren nach Anspruch 11, wobei das Samplingsignal von den Positionen, die für die signifikanten Samples ausgewählt wurden, abgeleitet wird.

13. Das Verfahren nach einem der Ansprüche 9 bis 11, wobei das Samplingsignal (CK) der Frequenz entspricht.
